(19) Europäisches Patentamt
European Patent Office
Office européen des brevets

(11) Veröffentlichungsnummer: **0 106 225**
**A1**

# (12) EUROPÄISCHE PATENTANMELDUNG

(21) Anmeldenummer: 83109666.4

(22) Anmeldetag: 28.09.83

(51) Int. Cl.³: C 08 L 69/00
C 08 L 67/02

(30) Priorität: 09.10.82 DE 3237477

(43) Veröffentlichungstag der Anmeldung:
25.04.84 Patentblatt 84/17

(84) Benannte Vertragsstaaten:
DE FR GB IT

(71) Anmelder: BAYER AG
Konzernverwaltung RP Patentabteilung
D-5090 Leverkusen 1 Bayerwerk(DE)

(72) Erfinder: Kleiner, Frank, Dr.
Am Sonnenhang 62
D-5090 Leverkusen 3(DE)

(72) Erfinder: Kubens, Rolf, Dr.
Carl-Leverkus-Strasse 1
D-5068 Odenthal-Hahnenberg(DE)

(72) Erfinder: Reese, Eckart, Dr.
Aggerstrasse 22
D-4047 Dormagen(DE)

(72) Erfinder: Wank, Joachim, Dupl.-Ing.
Zülpicher Strasse 7
D-4047 Dormagen 5(DE)

## (54) Verwendung von Polycarbonat/Polybutylenterephthalat-Mischungen zur Herstellung von Folien.

(57) Aus Mischungen von Polycarbonat und Polybutylenterephalat lassen sich monoaxial verstreckte Folien herstellen, die beim Erwärmen ausschließlich in Verstreckrichtung schrumpfen.

EP 0 106 225 A1

BAYER AKTIENGESELLSCHAFT 5090 Leverkusen, Bayerwerk

Zentralbereich
Patente, Marken und Lizenzen Pv/ABc

Verwendung von Polycarbonat/Polybutylenterephthalat-Mischungen zur Herstellung von Folien

Die Erfindung betrifft die Verwendung von Mischungen von aromatischen Polycarbonat und Polybutylenterephthalat zur Herstellung von Folien.

Werden Polybutylenterephthalatfolien monoaxial verstreckt, schrumpfen sie beim Erwärmen nicht nur in der Verstreckrichtung, sondern auch quer dazu. Diese unerwünschte Eigenschaft läßt sich auch durch Thermofixierung nicht vermeiden.

Überraschenderweise wurde nun gefunden, daß sich aus Polycarbonat/Polybutylenterephthalat-Mischungen verstreckte Folien herstellen lassen, die beim Erwärmen ausschließlich in Verstreckrichtung schrumpfen. Dies macht die Folien z.B. für die Herstellung von Schrumpfspulen und Schrumpfkondensatoren interessant.

Gegenstand der Erfindung ist also die Verwendung von Mischungen aus

A. 50 bis 90 Gew.-% aromatischem Polycarbonat und

B. 10 bis 50 Gew.-% Polybutylenterephthalat

(jeweils bezogen auf die Summe von A und B) zur Herstellung von Folien.

Bevorzugte Diphenole für die Herstellung der aromatischen Polycarbonate A sind Verbindungen der Formel

$$HO - Z - OH \qquad (I)$$

worin Z einen zweiwertigen ein- oder mehrkernigen aromatischen Rest mit 6-30 C-Atomen bedeutet, wobei Z derart gebaut ist, daß die beiden OH-Gruppen direkt an je ein C-Atom eines aromatischen Systems gebunden sind.

Besonders bevorzugte Diphenole sind Verbindungen der Formel

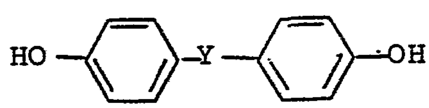

(II)

in der

Y eine Einfachbindung, einen Alkylen- oder Alkylidenrest mit 1 - 7 C-Atomen, einen Cycloalkylen- oder Cycloalkylidenrest mit 5 - 12 C-Atomen, -O-, -S-, $-\underset{\overset{\|}{O}}{S}-$, $-SO_2-$, oder $-\underset{\overset{\|}{O}}{C}-$ bedeutet, sowie deren kernalky-

lierte und kernhalogenierte Derivate, z.B.

Hydrochinon,
Resorcin,
Dihydroxidiphenyle,
Bis-(hydroxiphenyl)-alkane,
Bis-(hydroxyphenyl)-cycloalkane,
Bis-(hydroxiphenyl)-sulfide,
Bis-(hydroxiphenyl)-ether,
Bis-(hydroxiphenyl)-ketone,
Bis-(hydroxiphenyl)-sulfoxide,
Bis-(hydroxiphenyl)-sulfone und
α, α'-Bis-(hydroxiphenyl)-diisopropylbenzole,

sowie deren kernalkylierte und kernhalogenierte Verbindungen. Diese und weitere geeignete Diphenole sind z.B. in den US-Patentschriften 3 028 365, 3 275 601, 3 148 172, 3 062 781, 2 991 273, 3 271 367, 2 999 835, 2 970 131 und 2 999 846, in den deutschen Offenlegungsschriften 1 570 703, 2 063 050, 2 063 052, 2 211 956, 2 211 957, der französischen Patentschrift 1 561 518 und in der Monographie von H. Schnell, "Chemistry and Physics of Polycarbonates", Intersciene Publishers, New York, beschrieben.

Bevorzugte Diphenole sind z.B.

4,4'-Dihydroxydiphenyl,
2,4-Bis-(4-hydroxyphenyl)-2-methylbutan,
α, α'-Bis-(4-hydroxyphenyl)-p-diisopropylbenzol,

2,2-Bis-(3-methyl-4-hydroxyphenyl)-propan,
2,2-bis-(3-chlor-4-hydroxyphenyl)-propan,
Bis-(3,5-dimethyl-4-hydroxyphenyl)-methan,
Bis-(3,5-dimethyl-4-hydroxyphenyl)-sulfon,
2,4-Bis-(3,5-dimethyl-4-hydroxyphenyl)-2-methylbutan,
1,1-Bis-(3,5-dimethyl-4-hydroxyphenyl)-cyclohexan und
α,α'-Bis-(3,5-dimethyl-4-hydroxyphenyl)-p-diisopropylbenzol.

Besonders bevorzugte Diphenole sind z.B.

2,2-Bis-(4-hydroxyphenyl)-propan
2,2-Bis-(3,5-dimethyl-4-hydroxyphenyl)-propan
2,2-Bis-(3,5-dichlor-4-hydroxyphenyl)-propan
2,2-Bis-(3,5-dibrom-4-hydroxyphenyl)-propan
1,1-Bis-(4-hydroxyphenyl)-cyclohexan.

Bevorzugte aromatische Polycarbonate A sind solche, denen ein oder mehrere der als bevorzugt genannten Diphenole zugrundeliegen. Besonders bevorzugt werden Copolycarbonate, denen 2,2-Bis-(4-hydroxyphenyl)-propan und eines der anderen als besonders bevorzugt genannten Diphenole zugrundeliegen. Besonders bevorzugt sind weiterhin Polycarbonate A allein auf Basis von 2,2-Bis-(4-hydroxyphenyl)-propan oder 2,2-Bis-(3,5-dimethyl-4-hydroxyphenyl)-propan.

Die aromatischen Polycarbonate A können nach bekannten Verfahren hergestellt werden, so z.B. nach dem Schmelzumesterungsverfahren aus Diphenolen und Diphenylcarbonat und dem Zweiphasen-Grenzflächenverfahren aus Diphenolen und Phosgen, wie es in der obengenannten Literatur beschrieben ist.

Die aromatischen Polycarbonate A können durch den Einbau geringer Mengen, vorzugsweise von Mengen zwischen 0,05 und 2,0 Mol-% (bezogen auf eingesetzte Diphenole), an mehr als zweifunktionellen Verbindungen, insbesondere solchen mit drei oder mehr als drei phenolischen Hydroxygruppen, verzweigt sein.

Polycarbonate dieser Art sind z.B. in den deutschen Offenlegungsschriften 1 570 533, 1 595 762, 2 116 974, 2 113 347, der britischen Patentschrift 1 079 821, der US-Patentschrift 3 544 514 und in der deutschen Offenlegungsschrift 2 500 092 beschrieben.

Die aromatischen Polycarbonate A sollen in der Regel relative Lösungsviskositäten von 1,16 bis 1,5 besitzen, gemessen in Dichlormethan bei 20°C und einer Konzentration von 0,5 g Polycarbonat in 100 ml Lösung.

Als Kettenabbrecher zur Einstellung des Molekulargewichtes der aromatischen Polycarbonate A werden vorzugsweise Phenol, Alkylphenole mit $C_1$-$C_{12}$-Alkylgruppen, halogenierte Phenole, Hydroxydiphenyl, Naphthole, Chlorkohlensäureester aus solchen phenolischen Verbindungen und Chloride von aromatischen Monocarbonsäuren, die gegebenenfalls durch $C_1$-$C_{22}$-Alkylgruppen und Halogenatome

substituiert sein können, ferner Chloride von aliphatischen Monocarbonsäuren mit bis zu 25 C-Atomen in Mengen von 0,1 bis 10 Mol-% (im Falle von Phenolen bezogen auf Diphenole, im Falle von Säurechloriden bezogen auf Säuredichloride) verwendet.

Bevorzugte Polybutylenterephthalate B enthalten mindestens 80, vorzugsweise mindestens 90 Mol-%, bezogen auf die Dicarbonsäurekomponente, Terephthalsäurereste und mindestens 80, vorzugsweise mindestens 90 Mol-%, bezogen auf die Diolkomponente, Butandiol-1,4-reste.

Die bevorzugten Polybutylenterephthalate B können neben Terephthalsäureresten bis zu 20 Mol-% Reste anderer aromatischer Dicarbonsäuren mit 8 bis 14 C-Atomen oder aliphatischer Dicarbonsäuren mit 4 bis 12 C-Atomen enthalten, wie z.B. Reste von Phthalsäure, Isophthalsäure, Naphthalin-2,6-dicarbonsäure, 4,4'-Diphenyl-dicarbonsäure, Bernstein-, Adipin-, Sebacinsäure, Azelainsäure, Cyclohexandiessigsäure.

Die bevorzugten Polybutylenterephthalate B können neben Butandiol-1,4-resten bis zu 20 Mol-% anderer aliphatischer Diole mit 2 bis 12 C-Atomen oder cycloaliphatischer Diole mit 6 bis 21 C-Atomen enthalten, z.B. Reste von Ethylenglykol, Propandiol-1,2, Propandiol-1,3, 2-Ethylpropandiol-1,3, Neopentylglykol, Pentan-diol-1,5, Hexandiol-1,6, Cyclohexan-dimethanol-1,4, 3-Methylpentandiol-2,4, 2-Methylpentandiol-2,4, 2,2,4-Trimethylpentandiol-1,3 und -1,6, 2-Ethylhexandiol-1,3, 2,2-Diethylpropandiol-1,3, Hexandiol-2,5, 1,4-Di-(ß-hydroxyethoxy)-benzol, 2,2-bis-(4-hydroxycyclohexyl)-propan, 2,4-Dihydroxy-1,1,3,3-tetramethyl-cyclobutan, 2,2-Bis-(3-ß-hydroxy-ethoxy)-propan und 2,2-Bis-(4-hydroxypropoxy-phenyl)-propan (DE-OS 24 07 674, 24 07 776, 27 15 932).

Die Polybutylenterephthalate B können durch Einbau relativ kleiner Mengen oder 3- oder 4-wertiger Alkohole oder 3- oder 4-basischer Carbonsäuren, wie sie z.B. in der DE-OS 19 00 270 und der US-PS 3 692 744 beschrieben sind, verzweigt werden. Beispiele bevorzugter Verzweigungsmittel sind Trimesinsäure, Trimellithsäure, Trimethylolethan und -propan und Pentaerythrit.

Es ist ratsam, nicht mehr als 1 Mol-% des Verzweigungsmittels, bezogen auf die Säurekomponente, zu verwenden.

Besonders bevorzugt sind Polybutylenterephthalate B, die allein aus Terephthalsäure und/oder deren reaktionsfähigen Derivaten (z.B. deren Dialkylestern) und Butandiol-1,4 hergestellt worden sind.

Die als Komponente B vorzugsweise verwendeten Polybutylenterephthalate besitzen im allgemeinen eine Intrinsic-Viskosität von 0,4 bis 1,5 dl/g, vorzugsweise 0,5 bis 1,3 dl/g, insbesondere 0,6 bis 1,2 dl/g, jeweils gemessen in Phenol/o-Dichlorbenzol (1:1 Gew.-Teile) bei 25°C.

Die Folien können aus den Mischungen A+B auf an sich bekannte Weise hergestellt werden. Die Dicke der Folien beträgt in der Regel 5 bis 500 µm, vorzugsweise 25 bis 100 µm. Die Folien können in einem Verhältnis von 1:1,5 bis 1:4 verstreckt werden.

## Beispiele

### Vergleich

Polybutylenterephthalat einer Intrinsic-Viskosität von 1,20 dl/g, gemessen in Phenol/o-Dichlorbenzol (1:1 Gewichtsteile) bei 25°C, wird auf einem Einwellenextruder aufgeschmolzen, die Schmelze wird über eine Breitschlitzdüse ausgedrückt und über eine Chill-Roll-Anlage zu einer 40 µm dicken Folie ausgezogen. Die erhaltene Folie wird auf einer Längsreckanlage bei einer Temperatur von 140°C im Verhältnis 1:2 verstreckt.

Die so erhaltene Folie zeigt bei Erwärmen auf 160°C einen freien Schrumpf von 30 % in Längs- und von 15 % in Querrichtung.

### Beispiel 1

Eine Mischung aus 40 Gew.-Teilen Polybutylenterephthalat einer Intrinsic-Viskosität von 1.20 dl/g, gemessen in Phenol/o-Dichlorbenzol (1:1 Gewichtsteile) bei 25°C, und 60 Gew.-Teilen Bisphenol-A-Polycarbonat mit einer relativen Viskosität von 1,30, gemessen in Dichlormethan bei 20°C und einer Konzentration von 0,5 g Polycarbonat in 100 ml Lösung, wird nach dem obigen Vergleichsbeispiel zu einer 40 µm dicken Folie verarbeitet, die auf einer Längsreckanalge bei einer Temperatur von 145°C im Verhältnis 1:2 gereckt wird.

Bei Einwärmen auf 160°C schrumpft die Folie 40 % in Längsrichtung, während die Breite um 0,2 % zunimmt.

Beispiel 2

Eine Mischung gemäß Beispiel 1 von 40 Gew.-Teilen Polybutylenterephthalat und 60 Gew.-Teilen Bisphenol-A-Polycarbonat werden auf einem Einwellenextruder aufgeschmolzen, die Schmelze über eine Ringdüse ausgedrückt und der erhaltene Schlauch im Durchmesser 1 : 4 aufgeblasen.

Das Flachlegen und Aufwickeln des Schlauches geschieht in an sich bekannter Weise über einen Blasfolienabzug. Die Abzugsgeschwindigkeit wird so eingestellt, daß die fertige Folie eine Dicke von 10 µm hat.

Der erhaltene Folienschlauch wird an den Quetschkanten aufgeschnitten und die Folienbahnen getrennt aufgewickelt. Die so erhaltene Folienbahn wird auf einer Längsreckanlage im Mehrspalt-Reckverfahren 1 : 3,3 längsgereckt. Die erhaltene 3 µm dicke Folie wird im Hochvakuum bei $10^{-4}$ Torr mit Aluminium bedampft. Durch Abdeckbänder von 4 mm Breite werden metallfreie Zonen erhalten.

Die erhaltenen Schmalschnittrollen werden paarweise zu Kondensatoren zusammengewickelt, wobei die metallfreien Ränder sich gegenüberliegen. Zur Verfestigung des Wickels wird dieser auf 120°C erwärmt. Die Kontaktierung der einzelnen Folienlagen geschieht durch Aufspritzen von Zink nach dem Flammspritz-Verfahren. Da die erfindungsgemäße Folie nicht in Querrichtung schrumpft, wird vermieden, daß bei dieser Temperaturschockbehandlung sich die Folienränder zurückziehen und es damit zum Kurzschluß der einzelnen Folienlagen kommt.

Beispiel 3

Auf eine Folie, die gemäß Beispiel 1 hergestellt wird, werden in einer Beschichtungsanlage 25 g/m² eines selbstvernetzenden Acrylsäureisooctylesters, gelöst in Methylethylketon aufgebracht, das Lösungsmittel des Klebers im Trockenkanal ausgedampft und anschließend die Folie aufgewickelt.

Die in Bändern geschnittene selbstklebende Folie wird radial um Elektrolytkondensatoren geklebt, wobei die Folienenden 3 mm überlappen. Die Folienbreite wird so gewählt, daß die Ränder auf jeder Seite 2 mm überstehen. Die so vorbereiteten Elektrolytkondensatoren durchlaufen einen Heißluftkanal, wobei die Lufttemperatur und die Durchlaufgeschwindigkeit so eingestellt werden, daß die Folie auf ca. 150°C erwärmt wird. Durch diese Temperaturbehandlung schrumpft die Folie fest auf das Gehäuse des Elektrolytkondensators auf und die überstehenden Ränder legen sich um die Kanten, so daß das Gehäuse des Kondensators elektrisch völlig isoliert ist.

Patentanspruch

Verwendung von Mischungen aus

A. 50 bis 90 Gew.-% aromatischem Polycarbonat und

B. 10 bis 50 Gew.-% Polybutylenterephthalat

(jeweils bezogen auf die Summe von A und B) zur Herstellung von Folien.

0106225

Europäisches Patentamt

# EUROPÄISCHER RECHERCHENBERICHT

Nummer der Anmeldung

EP 83 10 9666

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | DE-A-3 023 796 (GENERAL ELECTRIC CO.)<br>* Ansprüche 1-3, 6-8; Seite 23, letzter Absatz; Seite 24, Tabelle II, Beispiele 6, 7; Seite 25, erster Absatz *<br>--- | 1 | C 08 L 69/00<br>C 08 L 67/02 |
| X | JOURNAL OF APPLIED POLYMER SCIENCE, Band 22, Nr. 8, August 1978, New York, USA D.C. WAHRMUND et al. "Polyester-polycarbonate blends. I. Poly(butylene terephthalate)" Seiten 2155-2164<br>* Seite 2156, erster und vierter Absatz *<br>--- | 1 | |
| A | US-A-4 044 073 (A.L. BARON et al.)<br>* Zusammenfassung *<br>--- | | RECHERCHIERTE SACHGEBIETE (Int. Cl. 3) |
| A | US-A-4 230 656 (S.A. AMIN et al.)<br>* Zusammenfassung *<br>----- | | C 08 L 67/02<br>C 08 L 69/00 |

Der vorliegende Recherchenbericht wurde für alle Patentansprüche erstellt.

| Recherchenort | Abschlußdatum der Recherche | Prüfer |
|---|---|---|
| BERLIN | 05-01-1984 | HASS C V F |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument